# EUROPÄISCHE PATENTANMELDUNG

(11) **EP 1 004 387 A1**
(43) Veröffentlichungstag der Anmeldung: **31.05.2000**
(21) Anmeldenummer: 99122671.3
(22) Anmeldetag: 15.11.1999
(51) Int. Cl.: B23K 7/10

(54) **Brennerführungssystem**

(30) Priorität: 26.11.1998 DE 19854599
(71) Anmelder: Messer Cutting & Welding AG, 64823 Gross-Umstadt (DE)
(72) Erfinder: Nickenig, Lutz Dr., 64832 Babenhausen (DE); Grimmer, Rainer, 61440 Oberursel (DE)
(74) Vertreter: Berdux, Klaus, Dipl.-Ing.

(57) **Zusammenfassung**

Die Erfindung betrifft ein Brennerführungssystem für Brennschneidmaschinen mit einer in ein an einem Querwagen (7) angeflanschtes Gehäuse (8) angeordneten und den Brenner in vertikaler Richtung durch ein mit einem Antrieb (10, 12) verbundenes Führungssystem (4) höhenverstellbaren Pinole (1), wobei das Führungssystem (4) aus ein bewegliches in festen Roll-, Kugel- oder Gleit-Führungskörpern (3) geführtes Führungsprofil besteht.
Erfindungsgemäß wird dadurch, daß das zwischen den Führungskörpern (3) geführte Führungsprofil des Führungssystems (4) der den Brenner vertikal höhenverstellbaren Pinole (1) unterschiedlich ausgebildet ist, ein Schwingungsanregungen in der Z-Achse von Brennschneidmaschinen ausschließendes und durch Verwendung von industriell gefertigten Standard-Führungsprofilen kostengünstiges Brenner-Führungssystem zur Verwendung bei Brennschneidmaschinen zur Verfügung gestellt.

## Beschreibung

Die Erfindung betrifft ein Brennerführungssystem für Brennschneidmaschinen mit einer in ein an einem Querwagen angeflanschtes Gehäuse angeordneten und den Brenner in vertikaler Richtung durch ein mit einem Antrieb verbundenes Führungssystem höhenverstellbaren Pinole, wobei das Führungssystem aus ein bewegliches in festen Roll-, Kugel- oder Gleit-Führungskörpern geführtes Führungsprofil besteht.

Aus der DE-PS 35 31 953 ist eine Brenneraufhängung mit einem in vertikaler Richtung höhenverstellbaren Schlitten bekannt, dessen vertikale Höhenverstellbarkeit durch ein zwischen Wälzkörpern prismatisch geführtes Kantprofil in Form eines Kantrohrs erfolgt.
Diese überwiegend bei Brennschneidmaschinen älterer Bauart eingesetzte Brenneraufhängung ist in ihrer Fertigung kostenintensiv und aufgrund des durch die massiven Führungssystem-Teile bedingten Gewichtes schwer zu handhaben.

Die bei den Brennschneidmaschinen neueren Typs zur vertikalen Höhenverstellung des Brenners eingesetzten Führungssysteme weisen zwischen festen Roll-, Kugel- oder Gleitkörpern geführte, industriell gefertigte Führungsprofile auf, die aufgrund ihrer vielseitigen Verwendung nicht in jedem Fall die zur Verhinderung einer Schwingungsanregung in der Z-Achse bei Brennschneidmaschinen ausschließende Steifigkeit aufweisen und deshalb zur Einhaltung der bei diesen Maschinen anzuwendenden Sicherheitsstandards material-, zeit- und damit kostenaufwendig den jeweiligen Gegebenheiten bei Brennschneidmaschinen angepaßt werden müssen, zum Beispiel durch Befestigung auf einer Untergrundkonstruktion.

Der Erfindung liegt daher die Aufgabe zugrunde, ein Brennerführungssystem zu schaffen, welches eine Schwingungsanregung in der Z-Achse von Brennschneidmaschinen ausschließt und zudem durch seinen einfachen Aufbau und durch Verwendung von industriell vorgefertigten Führungsprofilen kostengünstig ist.

Diese Aufgabe wird erfindungsgemäß dadurch gelöst, daß das zwischen den Führungskörpern geführte Führungsprofil des Führungssystems der den Brenner vertikal höhenverstellbaren Pinole unterschiedlich ausgebildet ist.

In einer ersten vorteilhaften Ausgestaltung der Erfindung ist das zwischen den festen Roll-, Kugel- oder Gleit-Führungsprofil geführte Führungsprofil des Führungssystems der den Brenner vertikal höhenverstellbaren Pinole als ein mit mindestens ein Verstärkungs-Führungsprofil angeordnetes Standard-Führungsprofil ausgebildet, so daß eine die Schwingungsanregung in der Z-Achse der Brennschneidmaschine aussschließende Steifigkeit gewährleistet ist. Dieses im Aufbau einfache aber den einzuhaltenden Sicherheitsanforderungen bei Brennschneidmaschinen in jeder Hinsicht entsprechende Führungsprofil ist durch Verwendung von industriell gefertigten Standard-Führungselementen kostengünstig im zweckbestimmten Einsatz.

In einer weiteren vorteilhaften Ausgestaltung der Erfindung ist das zwischen den festen Roll-, Kugel- oder Gleit-Führungskörpern geführte Führungsprofil des Führungssystems der den Brenner vertikal höhenverstellbaren Pinole als Sonder-Führungsprofil mit einer den jeweiligen Einsatzbedingungen bei Brennschneidmaschinen entsprechenden Gestaltung ausgebildet. Dieses Führungsprofil ist besonders vorteilhaft für spezielle Einsatzzwecke verwendbar.

Die vertikale Höhenverstellung des Brenners durch die in ein mittels Flansch an dem Querwagen der Brennschneidmaschine befestigtes Gehäuse angeordnete Pinole erfolgt durch ein mit der Pinole in Wirkverbindung stehendes kraftübertragendes Element, vorzugsweise durch einen Zahnstangen-Ritzel-Motorantrieb.

Die Erfindung wird nachfolgend im Zusammenhang mit den in der Zeichnung (Figuren 1 bis 4) dargestellten bevorzugten Ausführungsbeispielen näher erläutert. In der Zeichnung zeigt:
- Fig. 1: in schematischer Darstellung eine in ein an einem Querwagen mittels Flansch befestigten Gehäuse angeordnete Pinole mit zugeordnetem Motorantrieb,
- Fig. 2: einen Schnitt durch ein mit ein erfindungsgemäßes Brennerführungssystem mit Zahnstangen-/Ritzel-Antriebselement ausgebildetes Gehäuse,
- Fig. 3: einen Schnitt durch ein zwischen zwei Rollen-Führungskörper geführtes Standard-Führungsprofil mit zugeordnetem Verstärkungs-Führungsprofil,
- Fig. 4: einen Schnitt durch ein zwischen zwei Rollen-Führungskörpern geführtes Sonder-Führungsprofil.

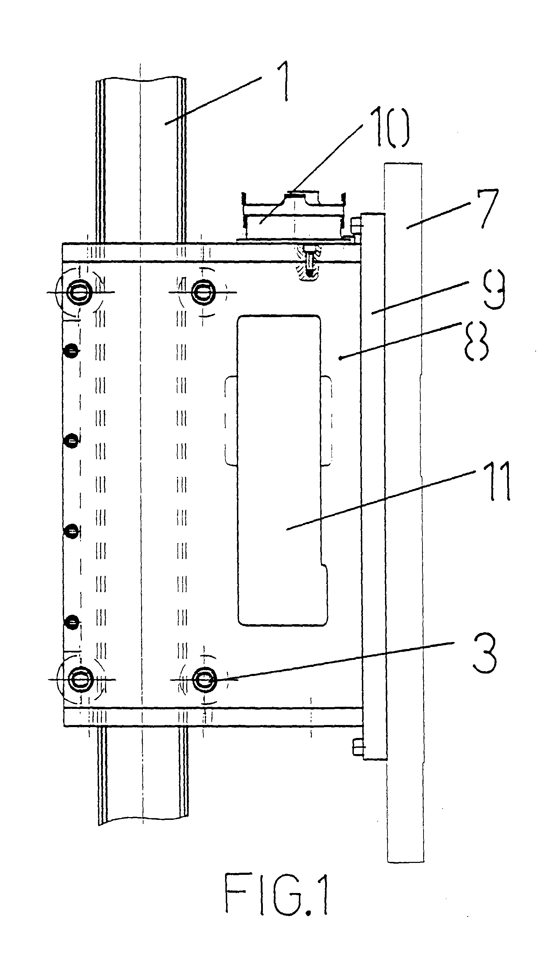

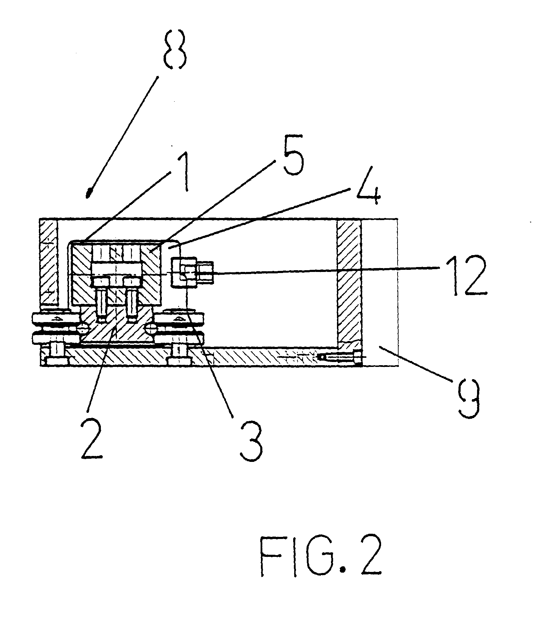

In Fig. 1 ist eine einen nicht dargestellten Brenner vertikal höhenverstellbare Pinole 1, die in ein eine Öffnung 11 für einen Motor 10 und zwei Paare von Rollen-Führungskörper 3 aufweisendes Gehäuse 8, das durch einen Anschlußflansch 9 an einem Querwagen 7 der Brennschneidmaschine befestigt ist, aufgezeigt.
Aus der Fig. 2 ist ersichtlich, daß im Gehäuse 8 ein zwischen zwei Rollen-Führungskörpern 3 geführtes Führungssystem 4, welches aus ein mit ein Verstärkungs-Führungsprofil 5 verbundenes Standard-Führungsprofil 2 besteht, mit der durch ein aus einer Zahnstange 12 mit Ritzel und nicht dargestelltem Motor 10 bestehendes Antriebselement angetriebenen Pinole 1 verbunden ist.

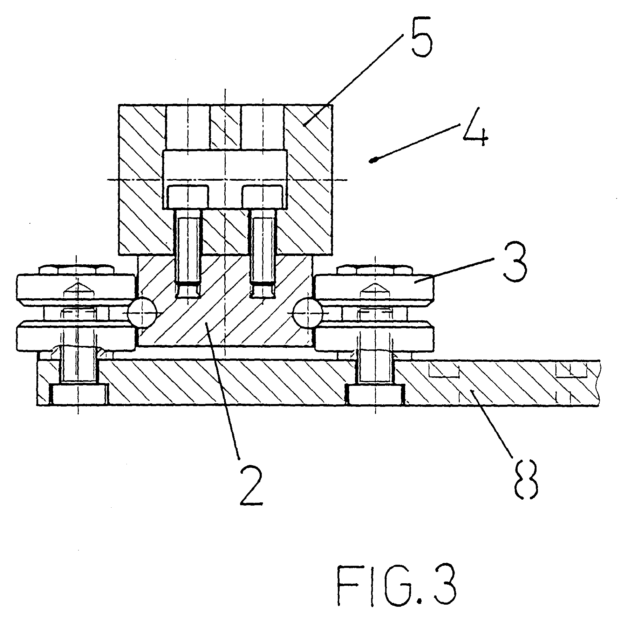

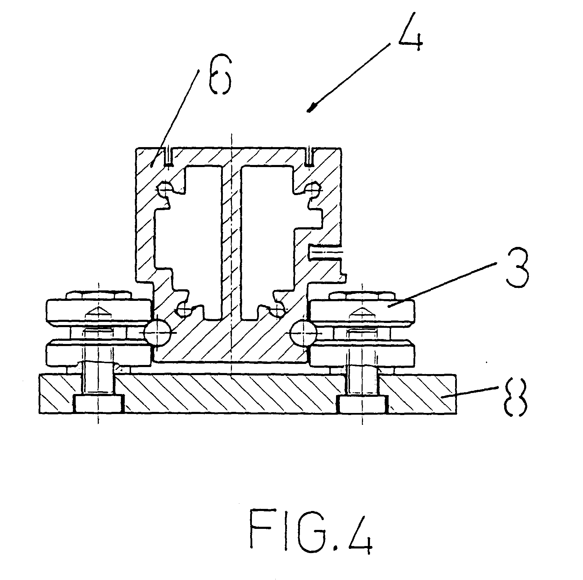

In Fig. 3 ist nochmals im Detail das zwischen zwei in der Wand des Gehäuses 8 befestigten Rollen-Führungskörpern 3 geführte, aus dem Standard-Führungsprofil 2 und Verstärkungs-Führungsprofil 5 bestehende Führungssystem 4 dargestellt. Selbstverständlich können an dem Standard-Führungsprofil 2 auch mehr als ein Verstärkungs-Führungsprofil 5 angeordnet sein.
Aus Fig. 4 ist das zwischen zwei in der Wand des Gehäuses 8 befestigten Rollen-Führungskörpern 3 geführte, aus ein Sonder-Führungsprofil 6 bestehende Führungssystem 4 ersichtlich. Das in den Fig. 3 und 4 dargestellte Verstärkungs- und Sonder-Führungsprofil 5, 6 ist nur ein ausgewähltes Beispiel für die vielfältigen Möglichkeiten der Gestaltung dieser Führungsprofile 5, 6 entsprechend den speziellen Einsatzzwecken.

### Bezugszeichen-Aufstellung

- 1: Pinole
- 2: Standard-Führungsprofil
- 3: Rollen-Führungskörper
- 4: Führungssystem
- 5: Verstärkungs-Führungsprofil
- 6: Sonder-Führungsprofil
- 7: Querwagen
- 8: Gehäuse
- 9: Anschlußflansch
- 10: Motor
- 11: Öffnung
- 12: Zahnstange

## Patentansprüche

1. Brennerführungssystem für Brennschneidmaschinen mit einer in ein an einem Querwagen angeflanschtes Gehäuse angeordneten und den Brenner in vertikaler Richtung durch ein mit einem Antrieb verbundenes Führungssystem höhenverstellbaren Pinole, wobei das Führungssystem aus ein bewegliches in festen Roll-, Kugel- oder Gleit-Führungskörpern geführtes Führungsprofil besteht,
dadurch gekennzeichnet,
daß das zwischen den Führungskörpern (3) geführte Führungsprofil des Führungssystems (4) der den Brenner vertikal höhenverstellbaren Pinole (1) unterschiedlich ausgebildet ist.

2. Brennerführungssystem nach Anspruch 1,
dadurch gekennzeichnet,
daß das Führungsprofil des Führungssystems (4) der den Brenner vertikal höhenverstellbaren Pinole (1) ein mit mindestens ein Verstärkungs-Führungsprofil (5) angeordnetes Standard-Führungsprofil (2) ist.

3. Brennerführungssystem nach Anspruch 1,
dadurch gekennzeichnet,
daß das Führungsprofil des Führungssystems (4) der den Brenner vertikal höhenverstellbaren Pinole (1) als ein Sonder-Führungsprofil (6) ausgebildet ist.

4. Brennerführungssystem nach einem der Ansprüche 1 bis 3,
dadurch gekennzeichnet,
daß das Verstärkungs- und Sonder-Führungsprofil (5, 6) entsprechend dem jeweiligen Verwendungszweck unterschiedlich ausgebildet ist.

5. Brennerführungssystem nach einem der Ansprüche 1 bis 4,
dadurch gekennzeichnet,
daß die den Brenner führende Pinole (1) in ein mittels Anschlußflansch 9 an den Querwagen 7 befestigtes Gehäuse 8 mit dem Führungssystem 4 angeordnete Pinole (1) durch ein mit einem Motor (10) in Wirkverbindung stehendes kraftübertragendes Element, vorzugsweise durch eine Zahnstange (12) mit Ritzel, vertikal höhenverstellbar ist.
